# EUROPÄISCHE PATENTSCHRIFT

(11) **EP 4 216 771 B1**
(45) Veröffentlichungstag und Bekanntmachung des Hinweises auf die Patenterteilung: **31.12.2025**
(21) Anmeldenummer: 21773325.2
(22) Anmeldetag: 02.09.2021
(51) Int. Cl.: A47J 31/06

(54) **FILTERHALTER UND KAFFEEMASCHINE**
FILTER HOLDER AND COFFEE MACHINE
PORTE-FILTRE ET MACHINE À CAFÉ

(30) Priorität: 24.09.2020 DE 102020124966
(43) Veröffentlichungstag der Anmeldung: 02.08.2023
(73) Patentinhaber: 10 X Innovation GmbH & Co. KG, 10961 Berlin (DE)
(72) Erfinder: RÖSLER, Jan, 10249 Berlin (DE); KORTE, René, 30161 Hannover (DE)
(74) Vertreter: Dantz, Jan Henning
(86) Internationale Anmeldenummer: PCT/EP2021/074266
(87) Internationale Veröffentlichungsnummer: WO 2022/063544

(56) Entgegenhaltungen:
- CN-A- 108 309 054
- DE-A1- 3 307 338
- DE-A1- 3 312 354
- US-A1- 2015 164 265
- US-A1- 2020 121 113

## Beschreibung

Die vorliegende Erfindung betrifft Filterhalter zur Aufnahme eines Filters mit Extraktionsmaterial, insbesondere Kaffeemehl, umfassend ein Aufnahmeteil mit einem Boden und mindestens einer bodenseitigen Durchgangsöffnung, an der ein Ventil zum Öffnen und Schließen der Durchgangsöffnung angeordnet ist, und eine Kaffeemaschine.

Die US 4 924 922 A offenbart einen Durchbrühdeckel für eine Kaffeemaschine, bei der durch das Hineinschieben eines Gefäßes, ein Ventil an einem Filterhalter geöffnet wird. Das Ventil wird durch eine Feder in eine geschlossene Position vorgespannt, bleibt aber durch die Anordnung des Gefäßes unter dem Ventil geöffnet.

In der EP 2 700 337 B1 ist eine Kaffeemaschine mit einem Filterhalter offenbart, der an einem Boden einen Auslass aufweist, der über ein Ventil verschließbar ist. Das Ventil kann mechanisch über einen Hebel geöffnet werden, wenn ein Behälter unter den Filterhalter eingeschoben wird, so dass der Hebel verschwenkt und das Ventil öffnet. Die Einwirkzeit des heißen Wassers auf das Kaffeemehl lässt sich bei dieser mechanischen Lösung nur manuell steuern. Durch die mechanische Koppelung ist ein ungewolltes Nachlaufen von Kaffee, welcher durch eine verlängerte Einwirkzeit vermehrt Bitterstoffe aufgenommen haben kann, nicht vermeidbar, da das Ventil so lange geöffnet ist, so lange der Behälter unter dem Filterhalter steht.

CN 108 309 054 offenbart eine Kaffeemaschine mit einem über eine Steuerung bewegbaren Ventil an einem Filterhalter, mittels dem der Abfluss des gebrühten Kaffees steuerbar ist.

Weitere Kaffeemaschinen zeigen US 2015/0164265, DE 33 12 354, US2020/0121113 und DE 33 07 338.

Es ist daher Aufgabe der vorliegenden Erfindung, einen Filterhalter zu schaffen der eine Ventilanordnung aufweist, welche automatisiert schaltbar ist.

Diese Aufgabe wird mit einem Filterhalter mit den Merkmalen des Anspruches 1 gelöst.

Erfindungsgemäß ist das Ventil zum Öffnen und Schließen der Durchgangsöffnung an dem Boden des Filterhalters mittels eines Linearantriebes bewegbar. Dadurch kann die Zeitdauer vorgegeben werden, die die Extraktionsflüssigkeit mit dem Extraktionsmaterial im Filter des Filterhalters verbleibt. Das Ventil verschließt nach Beendigung des Extraktionsvorganges die Durchgangsöffnung und es kann keine Flüssigkeit mehr aus dem Filterhalter austreten. Der Linearantrieb kann mit einem elektrischen Signal beaufschlagt werden, um den Öffnungszustand zu ändern, also die Durchgangsöffnung öffnen oder schließen. Dadurch ist eine Steuerung in Abhängigkeit von Sensorausgängen, der Zeit, Programmabläufen oder ähnlichem möglich.

Vorzugsweise ist zwischen dem Ventil und dem Linearantrieb ein Kurvenkörper mit mindestens einer Kurvenführung vorgesehen. Dadurch kann eine Bewegung eines bewegbaren Teils des Linearantriebes in eine andere Richtung umgelenkt werden. Beispielsweise kann das Ventil in vertikale Richtung und der der bewegbare Teil des Linearantriebes in horizontale Richtung bewegbar sein, so dass ein sehr kompakter Aufbau erhalten wird.

Die bodenseitige Durchgangsöffnung ist erfindungsgemäß über einen Schlauch mit einem Auslass an der Unterseite des Filterhalters zur Ausgabe einer Extraktionsflüssigkeit verbunden. Hierdurch wird einer Verschmutzung der Mechanik und Elektronik vorgebeugt, sowie ein hygienischer Umgang mit einem Lebensmittel sichergestellt. Der Schlauch kann dabei zumindest teilweise aus einem elastischen Material hergestellt sein. Dadurch kann eine zuverlässige Abdichtung an den Enden des Schlauches gewährleistet werden. Zudem kann der Schlauch eine Bewegung des Ventils bei Öffnen oder Schließen kompensieren, wenn das bewegliche Ventil über einen Mitnehmer und ein Verbindungsstück mit einem Abschnitt des elastischen Schlauches verbunden ist. Bei einer Bewegung des Ventils kann der Schlauch um den Hub des Ventils zusammengedrückt werden, beispielsweise mit einem Hub zwischen 3mm bis 10mm, insbesondere 4mm bis 8mm. Für eine besonders elastische Ausbildung des Schlauches kann dieser an einem oberen Abschnitt zwischen der Durchgangsöffnung und dem Verbindungsstück mindestens einen Faltenbalg umfassen.

Vorzugsweise ist ein bewegbarer Stößel des Linearantriebes durch ein rohrförmiges Verbindungsstück an dem Schlauch durchgeführt, das mit dem Ventil in vertikale Richtung bewegbar ist. Dadurch können der Linearantrieb und der Kurvenkörper für einen kompakten Aufbau an unterschiedlichen Seiten des Schlauches angeordnet werden.

Der Linearantrieb kann bevorzugt an einer Unterseite des Bodens fixiert sein, wobei ein bewegbarer Stößel des Linearantriebes durch einen Kanal eines Verbindungsstückes an dem Schlauch durchgeführt ist, das zusammen mit dem Ventil in vertikale Richtung bewegbar ist.

Zwischen dem Boden und einer Unterseite des Filterhalters mit einem Auslass für die Extraktionsflüssigkeit ist vorzugsweise eine geschlossene Hohlkammer gebildet, in der der Linearantrieb fixiert ist. Dadurch ist dieser geschützt vor Umgebungseinflüssen angeordnet.

Der Linearantrieb ist bevorzugt als bestrombaren elektromagnetischen Hubmagneten ausgebildet. Dadurch kann mit geringem Energieverbrauch eine Steuerung des Ventils erreicht werden. Alternativ kann der Linearantrieb auch als elektromotorisch angetriebener Spindelantrieb ausgebildet sein. Ferner kann der Linearantrieb auch ein Hydraulik- oder Pneumatikantrieb sein.

Der die Ventilanordnung bewegende Hubmagnet ist bevorzugt als bistabiler Linearmagnet ausgeführt, da dieser über exakt zwei diskrete stabile Zustände verfügt. Diese zwei Zustände können durch die Verbindung mit der Ventilanordnung in die Zustände des Ventils, geöffnet oder geschlossen, umgewandelt werden. Eine Zustandsänderung des Linearmagneten kann durch das Beaufschlagen eines kurzen, zum Beispiel 1 Millisekunde langem, elektrischen Impuls bewirkt werden. Dadurch wird der Tauchkern, in dem Tauchkernlager, von einer stabilen Endposition zur anderen bewegt und verweilt dort wieder.

Der erfindungsgemäße Filterhalter ist vorzugsweise mittels eines Halters lösbar, also herausnehmbar an einer Kaffeemaschine gehalten und kann somit leicht für einen Reinigungsvorgang entnommen werden. Dabei kann der Filterhalter zusammen mit dem Linearantrieb, insbesondere dem elektromagnetischen Hubmagneten entnommen werden, der optional von dem Filterhalter demontierbar ist.

Vorzugsweise weist der Filterhalter elektrische Kontakte auf, die mit elektrischen Kontakten an dem Halter verbunden sind, wobei über die Kontakte elektrische Signale zum Schalten des Linearantriebes übertragbar sind. Dadurch kann beispielsweise der Hubmagnet nach der elektrischen Kontaktierung geschaltet werden.

Die Erfindung wird nachfolgend anhand eines Ausführungsbeispiels mit Bezug auf die beigefügten Zeichnungen näher erläutert. Es zeigen:

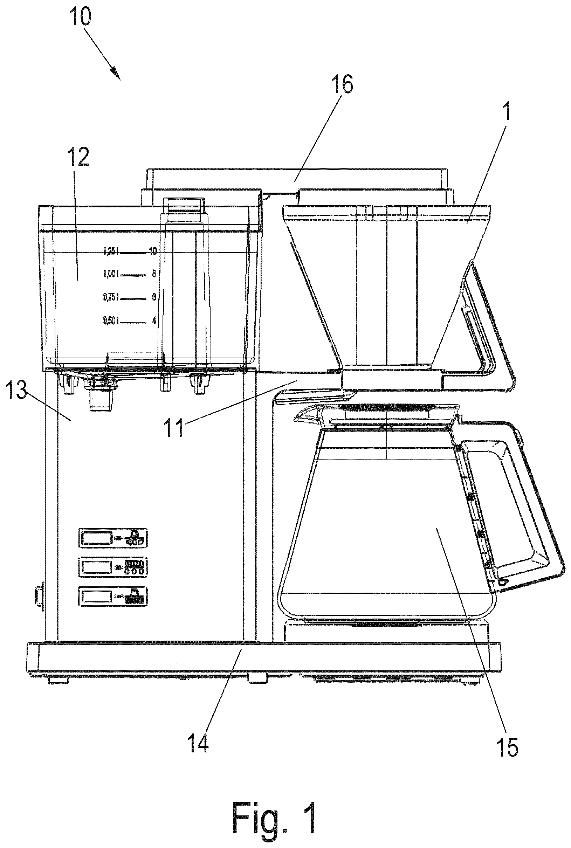

- Figur 1: eine Seitenansicht einer erfindungsgemäßen Kaffeemaschine mit einem Filterhalter;
- Figur 2: Ansicht eines erfindungsgemäßen Filterhalters ohne Kaffeemaschine;
- Figur 3: eine Seitenansicht des oberen Teils des Filterhalters mit der Ventilanordnung, und
- Figur 4: ein Schnitt durch die Seitenansicht des Filterhalters in Fig. 3.

Eine Kaffeemaschine 10 umfasst einen Wassertank 12, der an einem Gehäuse 13 mit einer Steuer- und Bedieneinheit angeordnet ist. Das Wasser aus dem Wassertank 12 kann über eine Pumpe und eine Heizeinrichtung erwärmt und zu einem Zulauf 16 für heißes Wasser geleitet werden, der oberhalb eines Filterhalters 1 angeordnet ist. Das Gehäuse 13 umfasst eine Bodenplatte 14, auf der ein Gefäß 15 abgestellt ist.

In dem Filterhalter 1 kann ein Filter, beispielsweise ein Filterpapiereinsatz mit einem Extraktionsmaterial, wie Kaffeemehl oder Tee, angeordnet werden. Der Filterhalter 1 ist dabei an einem Halter 11 unterhalb des Zulaufes 16 für heißes Wasser angeordnet. Unterhalb des Filterhalters 1 ist das Gefäß 15 abgestellt, in das die Extraktionsflüssigkeit aus dem Filterhalter 1 aufgenommen werden kann.

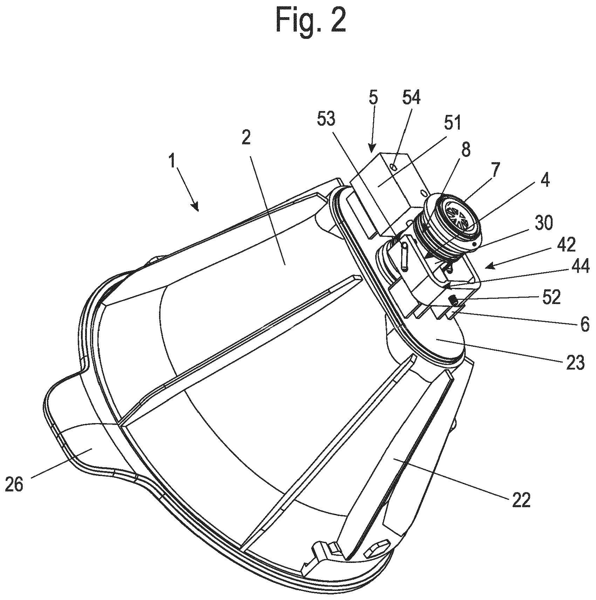

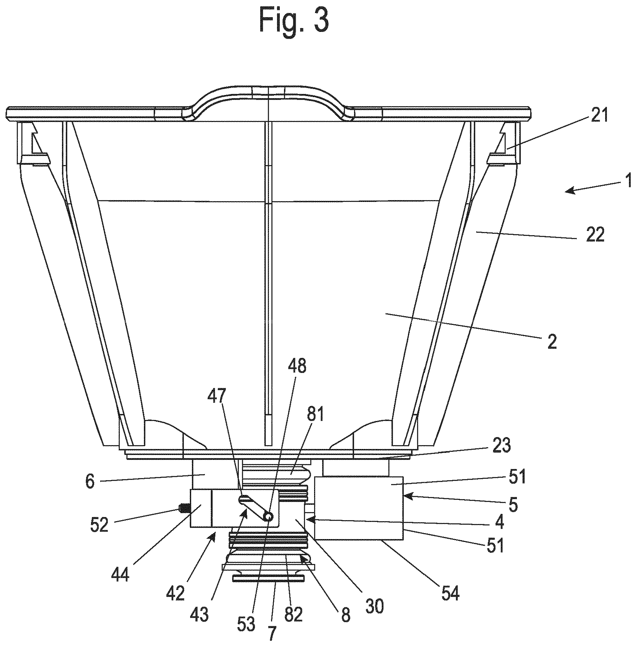

Figur 2 und 3 zeigen den Filterhalter 1 ohne die Kaffeemaschine 10. Der Filterhalter 1 umfasst ein Aufnahmeteil 2 mit einer nach oben offenen Aufnahme für einen Filter, die sich zu einem Boden 23 hin verjüngt. An dem Aufnahmeteil 2 sind an der Außenseite Rippen 22 oder andere Positioniermittel zur Positionierung an dem Halter 11 vorgesehen. An einem oberen Ring des Aufnahmeteils 2 ist ein nach außen hervorstehender Griffabschnitt 26 ausgebildet, mit der der Filterhalter 1 aus dem Halter 11 entnommen und eingefügt werden kann.

An dem Boden 23 des Filterhalters 1, ist eine Ventilanordnung mit einem Ventil 4 zum Öffnen und Verschließen einer Durchgangsöffnung 3 vorgesehen, das über einen Linearantrieb in Form eines Hubmagneten 5 betätigbar ist. Der Hubmagnet 5 umfasst einen bewegbaren Stößel 6, der einen Kurvenkörper 42 mit Kurvenführungen 43 bewegt, der als linear bewegbarer Schlitten 44 ausgebildet ist. Der Schlitten 44 ist entlang einer Linearführung des Filterhalters 1 bewegbar. In der montierten Position ist der Schlitten 44 in horizontale Richtung geführt. Die Kurvenführung 43 kann dabei ein eine obere Rastaufnahme 47 sowie eine untere Rastaufnahme 48 umfassen, in welchen der Mitnehmer 53 in einem stabilen Zustand einrasten kann. Optional kann die Kurvenführung 43 auch nur als Schräge ohne die Rastaufnahmen 47 und 48 ausgebildet sein.

Der Kurvenkörper 42 umgreift einen Schlauch 8 U-förmig und weist ein beiden Schenkeln eine Kurvenführung 43 auf, in denen jeweils ein Mitnehmer 53 geführt ist. Die beiden Mitnehmer 53 sind mit einem Verbindungsstück 30 an dem Schlauch 8 fixiert.

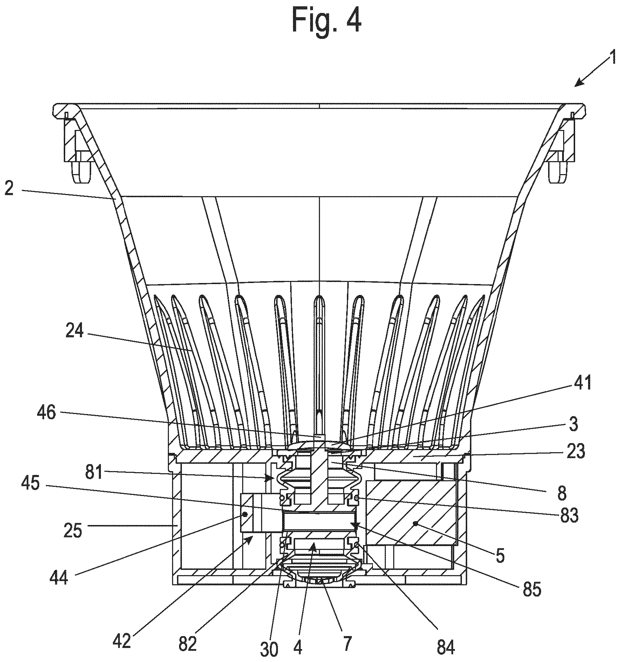

In Figur 4 ist der Filterhalter 1 im Schnitt dargestellt. Das Ventil 4 ist an dem Boden 23 an der Durchgangsöffnung 3 angeordnet und dichtet dies über einen Ventilkörper in der geschlossenen Position ab. Der Schlauch 8 ist über einen oberen Abschnitt 81 mit dem Boden 23 verbunden, der an der gegenüberliegenden Seite an dem Verbindungsstück 30 festgelegt ist. Der obere Abschnitt 81 des Schlauches 8 umfasst einen Faltenbalg und ermöglicht somit eine vertikale Bewegung des Verbindungsstückes 30 relativ zu dem Boden 23, ohne dass die Abdichtung beeinträchtigt wird.

Das Verbindungsstück 30 ist über einen unteren Abschnitt 82 des Schlauches 8 mit dem Auslass 7 an der Unterseite des Filterhalters 1 verbunden. Der untere Abschnitt 82 weist ebenfalls einen Faltenbalg auf, um eine Bewegung des Verbindungsstückes 30 relativ zu dem Auslass 7 kompensieren zu können.

Der Boden 23 mit Durchlassöffnung 3 ist über den Schlauch 8 mit dem Auslass 7 verbunden und der Hubmagnet 5 ist von dem Flüssigkeitskanal in dem Schlauch 8 isoliert. Der Hubmagnet 5 ist in einer Hohlkammer des Filterhalters 1 geschützt angeordnet.

Das Aufnahmeteil 2 umfasst Innenrippen 24 sowie zum Positionieren eines Filters, beispielsweise eines Filterpapiereinsatzes in dem Aufnahmeteil 2. An dem Boden 23 des Filterhalterkörpers 2 ist eine Verkleidung 25 festgelegt, die den Schlauch 8 und den Hubmagnet 5 umgibt.

Der horizontal verschiebbare Kurvenkörper 42, der über den Schlitten 44 an der Linearführung 6 gehalten ist, wirkt über die Kurvenführungen 43 auf die Mitnehmer 53, die an dem Verbindungstück 30 angebracht oder angeformt sind. Das Verbindungsstück 30 umfasst dabei eine rohrförmige Durchführung 45 für den Stößel 6 des Hubmagneten 5, wobei die Durchführung 45 relativ zu dem Stößel 6 in vertikale Richtung bewegbar ist. Hierfür kann die Durchführung 45 im Querschnitt oval oder länglich ausgebildet sein. Das Verbindungsstück 30 bildet mit dem Ventilkörper 41 eine bewegbare Einheit. Der Ventilkörper 41 weist dabei einen nach oben ragenden Stift und eine Abdeckung zum Verschließen der Durchgangsöffnung 3 auf.

Der Schlauch 8 umfasst den oberen Abschnitt 81 aus einem elastischen Material, der mittels eines unteren Rings 83 an dem Verbindungsstück 30 befestigt ist und am oberen Ende mit einem Ring an der Durchgangsöffnung 3 fixiert ist. Der Ventilkörper 41 liegt in der geschlossenen Position auf dem elastischen Ring zu Abdichtung auf.

Der untere Abschnitt 82 des Schlauches 8 ist mit einem oberen Ring 84 an dem Verbindungsstück 30 festgelegt und bildet mit einem unteren Ende einen Ablauf für die Extraktionsflüssigkeit aus. Dadurch kann die Flüssigkeit von der Durchgangsöffnung 3 innerhalb dem Schlauch 8 zu dem Auslass 7 strömen und die Hohlkammer um den Schlauch 8 herum ist vor Flüssigkeit geschützt angeordnet.

Der Hubmagnet 5 ist an dem Boden 23 des Filterhalters 1 fixiert und umfasst eine Tauchkernlager, der einen Tauchkern in zwei stabilen Lagen hält. Zur Stromversorgung des Hubmagneten 5 sind Leitungen mit elektrischen Kontakten verbunden, die beim Einsetzen des Filterhalters 1 in den Halter 11 elektrische Kontakte an dem Halter 11 kontaktieren, so dass das Ansteuern des Hubmagneten 5 zum Öffnen und Schließen des Ventils 4 programmgesteuert erfolgen kann und durch eine Extraktionsflüssigkeit, insbesondere Kaffee durchgeleitet werden kann. Optional kann der Hubmagnet mit dem Stößel 6 auch von dem Filterhalter 1 für einen Reinigungsvorgang demontiert werden.

In dem dargestellten Ausführungsbeispiel wird eine horizontale Bewegung des Stößels 6 des Hubmagneten 5 in eine vertikale Bewegung des Ventils 4 umgewandelt. Es ist natürlich auch möglich, die Bewegung des Stößels 6 des Hubmagneten 5 nicht horizontal, sondern in einem anderen Winkel relativ zu der Bewegung des Ventils 4 auszurichten. Die Betätigung des Hubmagneten 5 kann programmgesteuert über die Kaffeemaschine 10 erfolgen.

Zudem kann der Schlitten 44 mit dem Kurvenkörper 42 an dem Verbindungsstück 30 ausgebildet sein, so dass der Stößel 6 mit einem Mitnehmer verbunden ist, der in die Kurvenführung eingreift.

In dem dargestellten Ausführungsbeispiel ist der Linearantrieb als bestrombaren elektromagnetischer Hubmagnet ausgebildet. Es ist aber auch möglich, einen anderen Linearantrieb zu verwenden, beispielweise einen elektromotorisch angetriebenen Spindelantrieb, einen Hydraulik- oder Pneumatikantrieb.

### Bezugszeichenliste

- 1: Filterhalter
- 2: Aufnahmeteil
- 3: Durchgangsöffnung
- 4: Ventil
- 5: Hubmagnet
- 6: Stößel
- 7: Auslass
- 8: Schlauch
- 9: Faltenbalg
- 10: Kaffeemaschine
- 11: Halter
- 12: Wassertank
- 13: Gehäuse
- 14: Bodenplatte
- 15: Gefäß
- 16: Zulauf
- 22: Rippe
- 23: Boden
- 24: Innenrippe
- 25: Verkleidung
- 26: Griffabschnitt
- 30: Verbindungsstück
- 41: Ventilkörper
- 42: Kurvenkörper
- 43: Kurvenführung
- 44: Schlitten
- 45: Durchführung
- 47: obere Rastaufnahme
- 48: untere Rastaufnahme
- 53: Mitnehmer
- 81: oberer Abschnitt
- 82: unterer Abschnitt
- 83: unterer Ring
- 84: oberer Ring

## Patentansprüche

1. Filterhalter (1) zur Aufnahme eines Filters mit Extraktionsmaterial, insbesondere Kaffeemehl, umfassend ein Aufnahmeteil (2) mit einem Boden (23) und mindestens einer bodenseitigen Durchgangsöffnung (3), an der ein Ventil (4) zum Öffnen und Schließen der Durchgangsöffnung (3) angeordnet ist, wobei das Ventil (4) mittels eines Linearantriebes (5) bewegbar ist, **dadurch gekennzeichnet, dass** die bodenseitige Durchgangsöffnung (3) über einen Schlauch (8) mit einem Auslass (7) an der Unterseite des Filterhalters (1) zur Ausgabe eines Extraktionsproduktes verbunden ist.

2. Filterhalter nach Anspruch 1, **dadurch gekennzeichnet, dass** zwischen dem Ventil (4) und dem Linearantrieb (5) eine Kurvenkörper (42) mit mindestens einer Kurvenführung (43) vorgesehen ist.

3. Filterhalter nach Anspruch 1 oder 2, **dadurch gekennzeichnet, dass** das Ventil (4) in vertikale Richtung und ein Stößel (6) des Linearantriebes (5) in horizontale Richtung bewegbar ist.

4. Filterhalter nach einem der vorangegangenen Ansprüche, **dadurch gekennzeichnet, dass** der Schlauch (8) aus einem elastischen Material gebildet ist.

5. Filterhalter nach einem der vorangegangenen Ansprüche, **dadurch gekennzeichnet, dass** das bewegliche Ventil (4) über einen Mitnehmer (53) und ein Verbindungsstück (30) mit einem oberen Abschnitt (81) des elastischen Schlauches (8) verbunden ist.

6. Filterhalter nach Anspruch 5, **dadurch gekennzeichnet, dass** der Linearantrieb (5) durch das Verbindungsstück (30) an dem Schlauch (8) durchgeführt ist, das mit dem Ventil (4) mit dem Verbindungsstück in vertikale Richtung bewegbar ist.

7. Filterhalter nach Anspruch 5 oder 6, **dadurch gekennzeichnet, dass** ein oberer Abschnitt (81) des Schlauches (8) zwischen der Durchgangsöffnung (3) und dem Verbindungsstück (30) mindestens einen Faltenbalg umfasst.

8. Filterhalter nach einem der vorangegangenen Ansprüche, **dadurch gekennzeichnet, dass** der Linearantrieb (5) an einer Unterseite des Bodens (23) fixiert ist und ein bewegbarer Stößel (6) des Hubmagneten (5) durch eine Durchführung (45) eines Verbindungsstückes (30) durchgeführt ist, das zusammen mit dem Ventil (4) in vertikale Richtung bewegbar ist.

9. Filterhalter nach einem der vorangegangenen Ansprüche, **dadurch gekennzeichnet, dass** zwischen dem Boden (23) und einer Unterseite des Filteralters (1) mit einem Auslass (7) für die Extraktionsflüssigkeit eine geschlossene Hohlkammer gebildet ist, in der Linearantrieb (5) fixiert ist.

10. Filterhalter nach einem der vorangegangenen Ansprüche, **dadurch gekennzeichnet, dass** der Linearantrieb als bestrombarer elektromagnetischer Hubmagneten (5) ausgebildet ist.

11. Filterhalter nach Anspruch 10, **dadurch gekennzeichnet, dass** der elektromagnetische Hubmagnet (5) ein bistabiler elektromagnetischer Linearmagnet mit zwei diskreten Zuständen und stabilen Endpositionen ist.

12. Filterhalter nach Anspruch 2, **dadurch gekennzeichnet, dass** der Kurvenkörper (42) den Schlauch (8) zur Durchleitung der Extraktionsflüssigkeit U-förmig umgreift und an dem Kurvenkörper (42) auf gegenüberliegenden Seiten des Schlauches (8) jeweils eine Kurvenführung (43) ausgebildet ist.

13. Kaffeemaschine mit Filterhalter (1) nach einem der vorangegangenen Ansprüche, **dadurch gekennzeichnet, dass** der Filterhalter (1) mittels eines Halters (11) an der Kaffeemaschine (10) lösbar gehalten ist.

14. Kaffeemaschine nach Anspruch 13, **dadurch gekennzeichnet, dass** der Filterhalter (1) eine geschlossene Hohlkammer aufweist, in der der Linearantrieb (5) fixiert ist.

15. Kaffeemaschine nach Anspruch 13 oder 14, **dadurch gekennzeichnet, dass** der Filterhalter (1) elektrische Kontakte aufweist, die mit elektrischen Kontakten an dem Halter (11) verbunden sind und über die Kontakte elektrische Signale zum Schalten des Linearantriebes Hubmagneten (5) übertragbar sind.

## Claims

1. Filter holder (1) for accommodating a filter with extraction material, in particular ground coffee, comprising a receiving part (2) with a base (23) and at least one base-side through-opening (3), on which a valve (4) for opening and closing the through-opening (3) is arranged, wherein the valve (4) can be moved by means of a linear drive (5), **characterized in that** the base-side through-opening (3) is connected via a hose (8) to an outlet (7) on the underside of the filter holder (1) for dispensing an extraction product.

2. Filter holder according to claim 1, **characterized in that** a cam body (42) with at least one cam guide (43) is provided between the valve (4) and the linear drive (5).

3. Filter holder according to claim 1 or 2, **characterized in that** the valve (4) is movable in the vertical direction and a plunger (6) of the linear drive (5) is movable in the horizontal direction.

4. Filter holder according to one of the preceding claims, **characterized in that** the hose (8) is made of an elastic material.

5. Filter holder according to one of the preceding claims, **characterized in that** the movable valve (4) is connected to an upper section (81) of the elastic hose (8) via a driver (53) and a connecting piece (30).

6. Filter holder according to claim 5, **characterized in that** the linear drive (5) is passed through the hose (8) by the connecting piece (30), which can be moved in the vertical direction with the valve (4) and the connecting piece.

7. Filter holder according to claim 5 or 6, **characterized in that** an upper section (81) of the hose (8) between the through-opening (3) and the connecting piece (30) comprises at least one bellows.

8. Filter holder according to one of the preceding claims, **characterized in that** the linear drive (5) is fixed to an underside of the base (23) and a movable plunger (6) of the lifting magnet (5) is passed through a passage (45) of a connecting piece (30) which is movable in the vertical direction together with the valve (4).

9. Filter holder according to one of the preceding claims, **characterized in that** a closed hollow chamber, in which the linear drive (5) is fixed, is formed between the base (23) and an underside of the filter holder (1) with an outlet (7) for the extraction liquid.

10. Filter holder according to one of the preceding claims, **characterized in that** the linear drive is designed as an energizable electromagnetic lifting magnet (5).

11. Filter holder according to claim 10, **characterized in that** the electromagnetic lifting magnet (5) is a bistable electromagnetic linear magnet with two discrete states and stable end positions.

12. Filter holder according to claim 2, **characterized in that** the cam body (42) engages in a U-shape around the hose (8) for conducting the extraction liquid and a cam guide (43) is formed in each case on the cam body (42) on opposite sides of the hose (8).

13. Coffee machine with filter holder (1) according to one of the preceding claims, **characterized in that** the filter holder (1) is detachably held on the coffee machine (10) by means of a holder (11).

14. Coffee machine according to claim 13, **characterized in that** the filter holder (1) has a closed hollow chamber in which the linear drive (5) is fixed.

15. Coffee machine according to claim 13 or 14, **characterized in that** the filter holder (1) has electrical contacts which are connected to electrical contacts on the holder (11) and via which electrical signals for switching the linear drive lifting magnet (5) can be transmitted.

## Revendications

1. Porte-filtre (1) destiné à recevoir un filtre avec une matière pour extraction, en particulier du café moulu, comprenant une partie de logement (2) avec un fond (23) et au moins une ouverture de passage (3) du côté du fond, sur laquelle est disposée une soupape (4) pour ouvrir et fermer l'ouverture de passage (3), laquelle soupape (4) peut être déplacée au moyen d'un entraînement linéaire (5), **caractérisé en ce que** l'ouverture de passage (3) du côté du fond communique via un tuyau (8) avec une sortie (7) sur la face inférieure du porte-filtre (1) pour distribuer un produit d'extraction.

2. Porte-filtre selon la revendication 1, **caractérisé en ce qu'**un corps de came (42) avec au moins une courbe de guidage (43) est prévu entre la soupape (4) et l'entraînement linéaire (5).

3. Porte-filtre selon la revendication 1 ou 2, **caractérisé en ce que** la soupape (4) peut être déplacée verticalement et un poussoir (6) de l'entraînement linéaire (5) horizontalement.

4. Porte-filtre selon l'une des revendications précédentes, **caractérisé en ce que** le tuyau (8) est fait d'une matière élastique.

5. Porte-filtre selon l'une des revendications précédentes, **caractérisé en ce que** la soupape mobile (4) est reliée par l'intermédiaire d'un entraîneur (53) et d'un élément d'assemblage (30) à une partie supérieure (81) du tuyau élastique (8).

6. Porte-filtre selon la revendication 5, **caractérisé en ce que** l'entraînement linéaire (5) est guidé à travers l'élément d'assemblage (30) sur le tuyau (8), qui peut être déplacé verticalement avec la soupape (4) avec l'élément d'assemblage.

7. Porte-filtre selon la revendication 5 ou 6, **caractérisé en ce qu'**une partie supérieure (81) du tuyau (8) comprend au moins un soufflet entre l'ouverture de passage (3) et l'élément d'assemblage (30).

8. Porte-filtre selon l'une des revendications précédentes, **caractérisé en ce que** l'entraînement linéaire (5) est fixé sur une face inférieure du fond (23) et un poussoir mobile (6) de l'aimant de levage (5) est passé à travers une traversée (45) d'un élément d'assemblage (30) qui peut être déplacé verticalement avec la soupape (4).

9. Porte-filtre selon l'une des revendications précédentes, **caractérisé en ce qu'**une chambre creuse fermée, dans laquelle l'entraînement linéaire (5) est fixé, est formée entre le fond (23) et une face inférieure du porte-filtre (1) comportant une sortie (7) pour le liquide d'extraction.

10. Porte-filtre selon l'une des revendications précédentes, **caractérisé en ce que** l'entraînement linéaire est conçu comme un électroaimant de levage (5) pouvant être mis sous tension.

11. Porte-filtre selon la revendication 10, **caractérisé en ce que** l'électroaimant de levage (5) est un électroaimant linéaire bistable avec deux états discrets et des positions finales stables.

12. Porte-filtre selon la revendication 2, **caractérisé en ce que** le corps de came (42) entoure en forme de U le tuyau (8) pour l'acheminement du liquide d'extraction et une courbe de guidage (43) est formée sur le corps de came (42) sur des côtés opposés respectifs du tuyau (8).

13. Machine à café avec un porte-filtre (1) selon l'une des revendications précédentes, **caractérisée en ce que** le porte-filtre (1) est retenu de façon amovible sur la machine à café (10) au moyen d'une monture (11).

14. Machine à café selon la revendication 13, **caractérisée en ce que** le porte-filtre (1) comporte une chambre creuse fermée dans laquelle l'entraînement linéaire (5) est fixé.

15. Machine à café selon la revendication 13 ou 14, **caractérisée en ce que** le porte-filtre (1) comporte des contacts électriques qui sont connectés à des contacts électriques sur la monture (11) et des signaux électriques peuvent être transmis via les contacts pour la commutation de l'électroaimant de levage (5) d'entraînement linéaire.
